(19) Europäisches Patentamt
European Patent Office
Office européen des brevets

(11) **EP 2 905 780 A1**

(12) **EUROPEAN PATENT APPLICATION**

(43) Date of publication:
**12.08.2015 Bulletin 2015/33**

(51) Int Cl.:
**G10L 25/30** (2013.01)     **G10L 15/06** (2013.01)
**G10L 15/08** (2006.01)

(21) Application number: **15154579.5**

(22) Date of filing: **10.02.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.02.2014   US 201461938656 P**
**05.02.2015   US 201514614519**

(71) Applicant: **Malaspina Labs (Barbados) Inc.**
**St. Michael 11103 (BB)**

(72) Inventor: **Alireza, K. A K Anhari**
**Vancouver V6J 1Y6 (CA)**

(74) Representative: **Kazi, Ilya**
**Mathys & Squire LLP**
**The Shard**
**32 London Bridge Street**
**London SE1 9SG (GB)**

(54) **Voiced sound pattern detection**

(57)     The various implementations described enable systems, devices and methods for detecting voiced sound patterns in noisy real-valued audible signal data. In some implementations, detecting voiced sound patterns in noisy real-valued audible signal data includes imposing a respective region of interest (ROI) on at least a portion of each of one or more temporal frames of audible signal data, wherein the respective ROI is characterized by one or more relatively distinguishable features of a corresponding voiced sound pattern (VSP), determining a feature characterization set within at least the ROI imposed on the at least a portion of each of one or more temporal frames of audible signal data, and detecting whether or not the corresponding VSP is present in the one or more frames of audible signal data by determining an output of a VSP-specific RNN, trained to provide a detection output, at least based on the feature characterization set.

FIG. 1

**Description**

**RELATED APPLICATIONS**

This application claims the benefit of U.S. Provisional Patent Application No. 61/938,656, entitled "Voiced Sound Sequence Recognition," filed on February 11, 2014, and which is incorporated by reference herein.

**TECHNICAL FIELD**

The present disclosure relates to audible signal processing, and in particular, to detecting voiced sound patterns in noisy audible signal data using recurrent neural networks.

**BACKGROUND**

The ability to recognize voiced sound patterns is a basic function of the human auditory system. However, this psychoacoustic hearing task is difficult to reproduce using previously known machine-listening technologies because spoken communication often occurs in adverse acoustic environments that include ambient noise, interfering sounds, and background chatter. Nevertheless, as a hearing task, the unimpaired human auditory system is able recognize voiced sound patterns effectively and perceptually instantaneously.

As a machine-listening process, recognition includes detection of voiced sound patterns in audible signal data. Known processes that enable detection are computationally complex and use large memory allocations. For example, connectionist temporal classification (CTC) methods are used to train recurrent neural networks (RNNs) for the purpose of detecting one or more of a pre-specified set of voiced sound patterns. A typical CTC method includes generating a probabilistic cost function that characterizes the pre-specified set of voiced sound patterns. A RNN is trained by and utilizes the cost function to detect one or more of the pre-specified set of voiced sound patterns - a process known as *labelling unsegmented sequences*.

Due to the computational complexity and memory demands, previously known voiced sound pattern detection processes are characterized by long delays and high power consumption. As such, these processes are undesirable for low-power, real-time and/or low-latency devices, such as hearing aids and mobile devices (e.g., smartphones, wearables, etc.).

**SUMMARY**

Various implementations of systems, methods and devices within the scope of the appended claims each have several aspects, no single one of which is solely responsible for the attributes described herein. Without limiting the scope of the appended claims, some prominent features are described. After considering this disclosure, and particularly after considering the section entitled "Detailed Description" one will understand how the features of various implementations are used to enable various systems, methods and devices for the purpose of detecting voiced sound patterns (e.g., formants, phonemes, words, phrases, etc.) in noisy real-valued audible signal data using a RNN. In particular, after considering this disclosure those of ordinary skill in the art will understand how the aspects of various implementations are used to determine a cost function and a corresponding gradient for a RNN applied to the technical problem of recognizing voiced sound patterns in noisy real-valued audible signal data, such as keyword spotting and/or the recognition of other voiced sounds.

Some implementations include a method of detecting voiced sound patterns in audible signal data. In some implementations, the method includes imposing a respective region of interest (ROI) on at least a portion of each of one or more temporal frames of audible signal data, wherein the respective ROI is characterized by one or more relatively distinguishable features of a corresponding voiced sound pattern (VSP), determining a feature characterization set within at least the ROI imposed on the at least a portion of each of one or more temporal frames of audible signal data, and detecting whether or not the corresponding VSP is present in the one or more frames of audible signal data by determining an output of a VSP-specific RNN, which is trained to provide a detection output, at least based on the feature characterization set.

In some implementations, the method further comprises generating the temporal frames of the audible signal data by marking and separating sequential portions from a stream of audible signal data. In some implementations, the method further comprises generating a corresponding frequency domain representation for each of the one or more temporal frames of the audible signal data, wherein the feature characterization set is determined from the frequency domain representations. In some implementations, the respective ROI for the corresponding VSP is the portion of one or more temporal frames where the spectrum of the corresponding VSP has relatively distinguishable features as compared to others in a set of VSPs. In some implementations, the feature characterization set includes at least one of a spectra value, cepstra value, mel-scaled cepstra coefficients, a pitch estimate value, a signal-to-noise ratio (SNR) value, a voice strength estimate value, and a voice period variance estimate value. In some implementations, an output of the VSP-specific RNN is a first constant somewhere within the respective ROI in order to indicate a positive detection result, and a second constant outside of the VSP-specific RNN where the respective VSP is more difficult to detect or generally cannot be detected in average frames. In some implementations, a positive detection result occurs when the output of the VSP-specific RNN breaches a threshold value relative to the first constant.

Some implementations include a system and/or device operable to detect voiced sound patterns. In some implementations, the system and/or device includes a windowing module configured to impose a respective region of interest (ROI) on at least a portion of each of one or more temporal frames of audible signal data, wherein the respective ROI is characterized by one or more relatively distinguishable features of a corresponding voiced sound pattern (VSP), a feature characterization module configured to determine a feature characterization set within at least the ROI imposed on the at least a portion of each of one or more temporal frames of audible signal data, VSP detection (VSPD) module configured to detect whether or not the corresponding VSP is present in the one or more frames of audible signal data by determining an output of a VSP-specific RNN, which trained to provide a detection output, at least based on the feature characterization set.

Some implementations include a method of training a recurrent neural network (RNN) in order to detect a voiced sound pattern. In some implementations, imposing a corresponding region of interest (ROI) for a particular voiced sound pattern (VSP) on one or more frames of training data; determining an output of a respective VSP-specific RNN based on a feature characterization set associated with the corresponding ROI of the one or more frames of training data; updating weights for the respective VSP-specific RNN based on a partial derivative function of the output of the respective VSP-specific RNN; and continuing to process training data and updating weights until a set of updated weights satisfies an error convergence threshold.

Some implementations include a method of obtaining a corresponding region of interest (ROI) to detect a voiced sound pattern (VSP). In some implementations, the method includes determining a feature characterization set associated with one or more temporal frames including a voiced sound pattern (VSP), comparing the feature characterization set for the VSP with other VSPs in order to identify one or more distinguishing frames and features of the VSP, and generating a corresponding ROI for the VSP based on the identified one or more distinguishing frames and features of the VSP.

## BRIEF DESCRIPTION OF THE DRAWINGS

So that the present disclosure can be understood in greater detail, a more particular description may be had by reference to the features of various implementations, some of which are illustrated in the appended drawings. The appended drawings, however, merely illustrate the more pertinent features of the present disclosure and are therefore not to be considered limiting, for the description may admit to other effective features.

Figure 1 is a block diagram of a RNN detection system operable to detect voiced sound patterns (VSPs) in accordance with some implementations.

Figures 2A and 2B together include a flowchart representation of a method of training a RNN detection system in order to detect VSPs according to some implementations.

Figure 3 is a performance diagram illustrating an example output of a RNN detection system configured to provide a detection output within a single frame in accordance with some implementations.

Figure 4 is a performance diagram illustrating an example output of a RNN detection system configured to provide a detection output spanning two or more frames in accordance with some implementations.

Figure 5 is a flowchart representation of a method of detecting voiced sound patterns using a RNN detection system in accordance with some implementations.

Figure 6 is a block diagram of a RNN detection system operable to detect voiced sound patterns in accordance with some implementations.

Figure 7 is a flowchart representation of a method of determining respective regions of interest (ROIs) for pre-specified VSPs according to some implementations.

In accordance with common practice various features shown in the drawings may not be drawn to scale, as the dimensions of various features may be arbitrarily expanded or reduced for clarity. Moreover, the drawings may not depict all of the aspects and/or variants of a given system, method or apparatus admitted by the specification. Finally, like reference numerals are used to denote like features throughout the drawings.

**DETAILED DESCRIPTION**

Numerous details are described herein in order to provide a thorough understanding of the example implementations illustrated in the accompanying drawings. However, the invention may be practiced without many of the specific details. And, well-known methods, components, and circuits have not been described in exhaustive detail so as not to unnecessarily obscure more pertinent aspects of the implementations described herein.

As noted above, as a machine-listening process, recognition of voiced sound patterns includes detection of voiced sound patterns in audible signal data. More specifically, recognition typically involves detecting and labelling unsegmented sequences of audible signal data received from one or more microphones. In other words, portions of noisy real-valued audible signal data are identified and associated with discrete labels for phonemes, words and/or phrases (i.e., voiced sound patterns that are also termed "label sequences"). Previously known processes that enable detection of known voiced sound patterns are computationally complex and use large allocations of memory. A factor that contributes to the computational complexity and memory demand is that previous technologies rely on a single, very complex recurrent neural network (RNN) to simultaneously detect the presence of one or more of a set of pre-specified voiced sound patterns in noisy real-valued audible signal data. Computational complexity typically grows disproportionately in response to increases to the size of a RNN.

For example, known connectionist temporal classification (CTC) methods are used to train and use a RNN for the purpose of detecting known voiced sound patterns. Briefly, known CTC methods include interpreting the outputs of a RNN as a probability distribution. That is, known CTC methods include generating a probability distribution for a set of known "label sequences" (i.e., VSPs), which are conditioned on an input stream of audible signal data. A differentiable cost function is then derived from the probability distribution.

Generally, using previously known processes, the cost function is derived on the condition that it maximizes the probabilities of correctly labelling one or more portions of noisy real-valued audible signal data. In operation, based on a derivative of the cost function, the RNN is used to decide whether one or more of a set of pre-specified voiced sound patterns are present in noisy real-valued audible signal data. To those of ordinary skill in the art, this process is also known as *labelling unsegmented sequences*.

More specifically, using previously known processes, the RNN is trained with a backpropagation method, using a derivative of the cost function. A representation of the result is summarized in equation (1) as follows:

$$\frac{\partial p(\mathbf{l}|x)}{\partial y_k^t} = -\frac{1}{{y_k^t}^2} \sum_{s \epsilon lab(l,k)} \alpha_t(s)\beta_t(s) \qquad (1)$$

where $\alpha_t(s)$ is a forward variable of the RNN, $\beta_t(s)$ is a backward variable of the RNN, and $p(l|x)$ is a sum of the probabilities of all network paths corresponding to label $l$, provided by equation (2) as follows:

$$p(\mathbf{l}|x) = \sum_{\pi \epsilon \beta^{-1}(1)} p(\pi|\boldsymbol{x}) \qquad (2)$$

Equation (1) is computationally expensive to solve, and doing so utilizes a high level of processor time and a large allocation of working memory. As a result, it is undesirable to make use of equation (1) in low-power and/or restricted-power applications, such as those involving hearing aids and mobile devices (e.g., smartphones, wearable devices, etc.). Additionally, determination of equation (1) relies on the use of a *Forward-Backward* algorithm, and as such, equation (1) is not typically considered causal. Because the Forward-Backward algorithm involves acting on data in both the reverse order and the forward order, it utilizes an extensive amount of memory and responds too slowly for real-time and/or low-latency applications.

By contrast, various implementations disclosed herein include systems, methods and devices that incorporate a process for generating a differentiable cost function with a lower computational complexity than equation (1) above. Having lower complexity, methods of determining a differentiable cost function in accordance with various implementations can operate in or close to real-time and/or with lower latency, and with lower computational complexity in terms of CPU time and memory usage. In turn, such methods are suitable for low-power and/or restricted-power devices. Various implementations also provide a real-time and/or a low-latency method of determining the differentiable cost function that provides a lower complexity cost function and a corresponding derivative of the cost function.

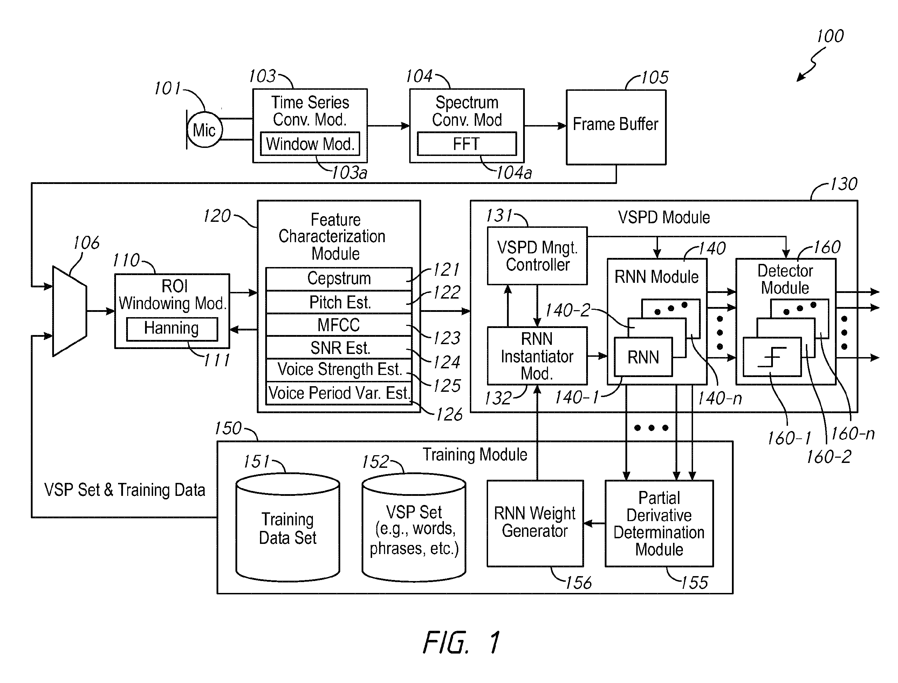

Figure 1 is a block diagram of a RNN detection system 100 operable to detect voiced sound patterns in accordance with some implementations. In various implementations, the RNN detection system 100 is included in a device or system operable for one or more machine-listening applications, such as a computer, a laptop computer, a tablet device, a mobile phone, a smartphone, a gaming device, and a hearing aid. In some implementations, the RNN detection system 100 includes one or more processors, one or more types of memory, a display and/or other user interface components such as a keyboard, a touch screen display, a mouse, a track-pad, a digital camera and/or any number of supplemental devices to add functionality. So while pertinent features are illustrated, those of ordinary skill in the art will appreciate from the present disclosure that various other features have not been illustrated for the sake of brevity and so as not to obscure more pertinent aspects of the implementations disclosed herein.

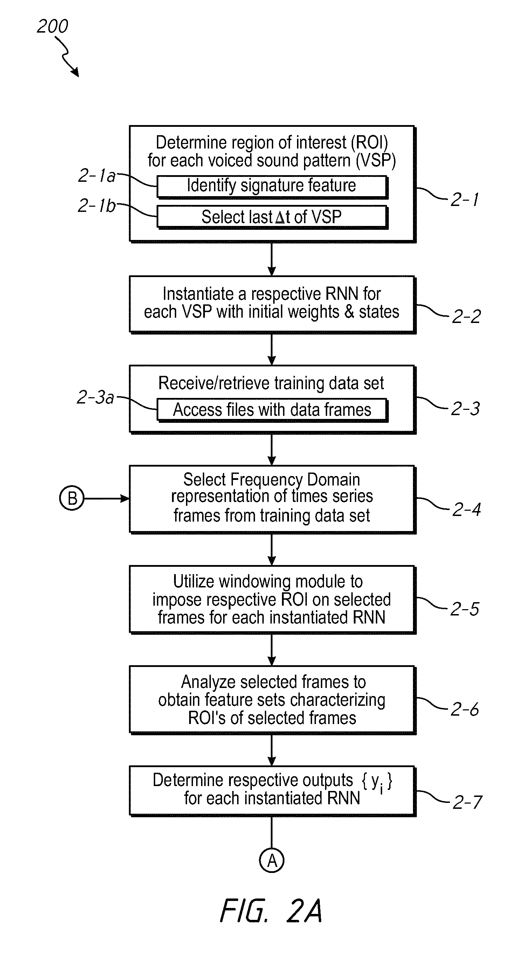

As a non-limiting example, in some implementations, the RNN detection system 100 includes a microphone 101, a time series conversion module 103, a spectrum conversion module 104, a frame buffer 105, a region of interest (ROI) windowing module 110, a feature characterization module 120, and a VSP detection (VSPD) module 130. In some implementations, the RNN detection system 100 includes a training module 150. In some implementations, a multiplexer (MUX) 106 is used to coordinate switching between training modes and detection modes, which are described below with reference to Figures 2A and 2B, 5 and 7. In some implementations, the training module 150 is provided separately.

The microphone 101 (e.g., one or more audio sensors) is provided to receive and convert sound into an electronic signal that can be stored in a non-transitory memory, and which is referred to as audible signal data herein. In many situations, the audible signal is captured from an adverse acoustic environment, and thus likely includes ambient noise, interfering sounds and background chatter in addition to the target voice of interest. In many applications, a received audible signal is an ongoing or continuous time series. In turn, in some implementations, the times series conversion module 103 is configured to generate two or more temporal frames of audible signal data from a stream of audible signal data. Each temporal frame of the audible signal data includes a temporal portion of the audible signal received by the microphone 101. In some implementations, the times series conversion module 103 includes a windowing module 103a that is configured to mark and separate one or more temporal frames or portions of the audible signal data for times $t_1$, $t_2$,... $t_n$. In some implementations, each temporal frame of the audible signal data is optionally conditioned by a pre-filter (not shown). For example, in some implementations, pre-filtering includes bandpass filtering to isolate and/or emphasize the portion of the frequency spectrum typically associated with human speech. In some implementations, pre-filtering includes pre-emphasizing portions of one or more temporal frames of the audible signal data in order to adjust the spectral composition of the one or more temporal frames of audible signal data. Additionally and/or alternatively, in some implementations, the windowing module 103a is configured to retrieve the audible signal data from a non-transitory memory. Additionally and/or alternatively, in some implementations, pre-filtering includes filtering the received audible signal using a low-noise amplifier (LNA) in order to substantially set a noise floor. In some implementations, a pre-filtering LNA is arranged between the microphone 101 and the time series conversion module 103. Those of ordinary skill in the art will appreciate that numerous other pre-filtering techniques may be applied to the received audible signal, and those discussed are merely examples of numerous pre-filtering options available.

The spectrum conversion module 104 operates to generate a corresponding frequency domain representation for each of the one or more temporal frames, so that one or more spectral characteristics of the audible signal data can be determined for each frame. In some implementations, the frequency domain representation of a temporal frame includes at least one of a plurality of sub-bands contiguously distributed throughout the frequency spectrum associated with voiced sounds. In some implementations, the spectrum conversion module 104 includes a Fast Fourier Transform (FFT) sub-module 104a. In some implementations, a 32 point short-time FFT is used for the conversion. Those of ordinary skill in the art will appreciate that any number of FFT implementations are used in various implementations. Additionally and/or alternatively, the FFT module 104a may also be replaced with any suitable implementation of one or more low pass filters, such as for example, a bank of IIR filters. Additionally and/or alternatively, the FFT module 104a may also be replaced with any suitable implementation of a gamma-tone filter bank, a wavelet decomposition module, and a bank of one or more interaural intensity difference (IID) filters. In some implementations, an optional spectral filter module (not shown) is configured to receive and adjust the spectral composition of the frequency domain representations of the one or more frames. In some implementations, for example, the spectral filter module is configured to one of emphasize, deemphasize, and/or isolate one or more spectral components of a temporal frame of the audible signal in the frequency domain.

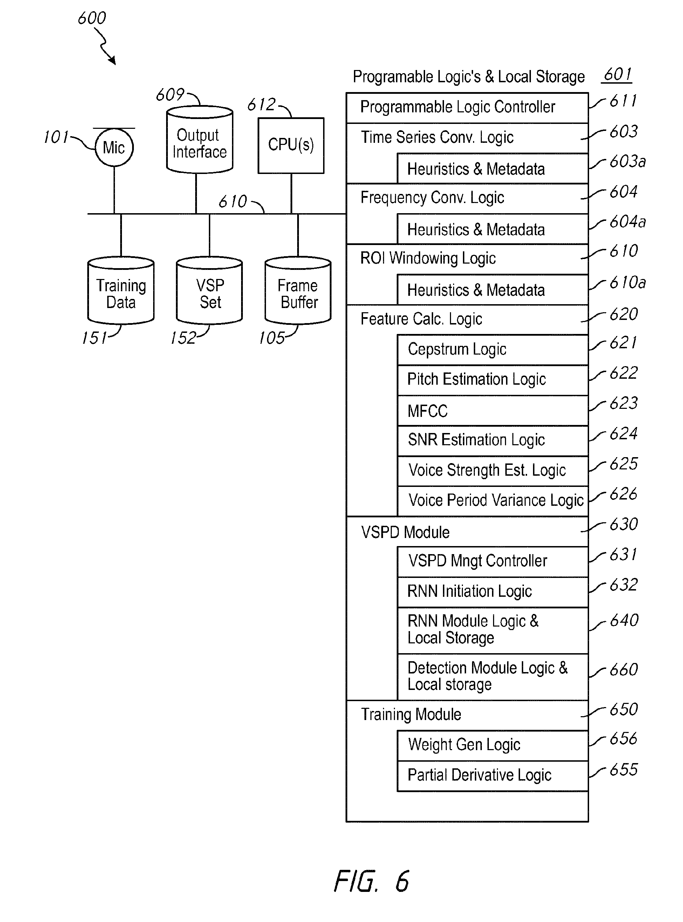

The frequency domain representations of the one or more frames are stored in the frame buffer 105. The MUX 106 is arranged in order to selectively couple one of the frame buffer 105 and the training module 150 to the ROI windowing module 110. In training mode(s), the MUX 106 couples the training module 150 to the ROI windowing module 110. In detection mode(s), the MUX 106 couples the frame buffer 105 to the ROI windowing module 110. In some implementations, operation of the MUX 106 is managed by a system controller (not shown) or operating system (See Figure 6).

The ROI windowing module 110 is provided to impose one or more respective regions of interest on at least a portion of each of the frequency domain representations of the one or more temporal frames of audible signal data. In some implementations, a respective ROI corresponds to one or more distinguishing features of a VSP. In some implementations, a respective ROI for a corresponding VSP is a portion of the frequency domain representation of one or more temporal frames where the spectrum of the corresponding VSP has relatively distinguishable features as compared to others in the pre-specified set of VSPs. As such, imposing the respective ROI allows a corresponding VSP-specific RNN (discussed below) to focus on the portion of the spectrum of one or more temporal frames that is more likely to include the distinguishing features of the particular VSP, in order to detect that particular VSP.

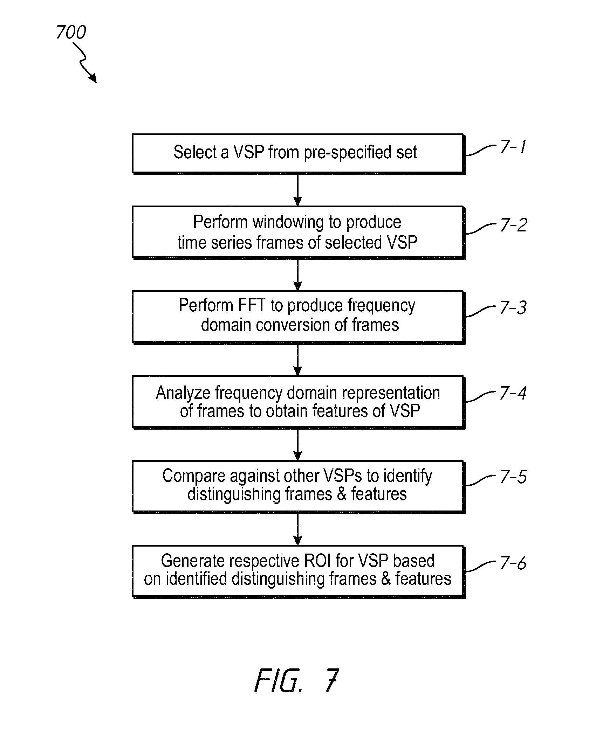

In some implementations, the ROI windowing module 110 includes a Hanning windowing module 111 operable to define and impose each VSP-specific ROI. In some implementations, the ROI is approximately 200 msec. In some implementations, when the ROI is substantially less than 200 msec, the response time of the system improves, but the accuracy of the system may decrease. In some implementations, when the ROI is substantially greater than 200 msec, the response time of the system degrades, but the accuracy of the system may increase. In some implementations, each respective ROI is determined manually for each VSP. In some implementations, respective ROIs for a pre-specified set of VSPs are determined relative to one another using an implementation of a process described below with reference to Figure 7.

The feature characterization module 120 is configured to assess and obtain the characteristics of features (i.e., a feature characterization set) in each of the frequency domain representations of the one or more frames of the audible signal data. In various implementations, a feature characterization set includes any of a number and/or combination of signal processing features, such as spectra, cepstra, mel-scaled cepstra, pitch, a signal-to-noise ratio (SNR), a voice strength estimate, and a voice period variance estimate. In some implementations, for example, the feature characterization module 120 includes one or more sub-modules that are configured to analyze the frames in order to obtain feature characterization data. As shown in Figure 1, the feature characterization module 120 includes a cepstrum analysis sub-module 121, a pitch estimation sub-module 122, a mel-frequency cepstrum coefficients analysis sub-module 123, a SNR estimation sub-module 124, a voice strength estimation sub-module 125, and a voice period variance estimation sub-module 126. Those of ordinary skill in the art will appreciate from the present disclosure that the functions of the six aforementioned sub-modules can be combined into one or more sub-modules and/or further sub-divided into additional sub-modules; and, that the six aforementioned sub-modules are provided as merely one example configuration of the various aspects and functions described herein.

In some implementations, the cepstrum analysis sub-module 121 is configured to determine the Inverse Fourier Transform (IFT) of the logarithm of a frequency domain representation of a temporal frame. In some implementations, the pitch estimation sub-module 122 is configured to provide a pitch estimate of voice activity in an audible signal. As known to those of ordinary skill in the art, pitch is generally an estimation of a dominant frequency characterizing a corresponding series of glottal pulses associated with voiced sounds. As such, the pitch estimation sub-module 122 is configured to identify the presence of regularly-spaced transients generally corresponding to glottal pulses characteristic of voiced speech. In some implementations, the transients are identified by relative amplitude and relative spacing. In some implementations, the mel-frequency cepstrum coefficients (MFCCs) analysis sub-module 123 is configured to provide a representation of the short-term power spectrum of a frequency domain representation of a temporal frame. Typically, the short-term power spectrum is based on a linear cosine transform on a log power spectrum on a non-linear mel scale of frequency. In some implementations, the SNR estimation sub-module 124 is configured to estimate the signal-to-noise ratio in one or more of the frequency domain representations of the temporal frames. In some implementations, the voice strength estimation sub-module 125 is configured to provide an indicator of the relative strength of the target or dominant voice signal in a frame. In some implementations, the relative strength is measured by the number of detected glottal pulses, which are weighted by respective correlation coefficients. In some implementations, the relative strength indicator includes the highest detected amplitude of the smoothed inter-peak interval accumulation produced by an accumulator function. In some implementations, the voice period variance estimation sub-module 126 is configured to estimate the pitch variance in one or more of the frequency domain representations of the temporal frames. In other words, the voice period variance estimator 126 provides an indicator for each sub-band that indicates how far the period detected in a sub-band is from the dominant voice period P. In some implementations the variance indicator for a particular sub-band is determined by keeping track of a period estimate derived from the glottal pulses detected in that particular sub-band, and comparing the respective pitch estimate with the dominant voice period P.

The VSPD module 130 is configured to detect whether or not each of one or more VSPs are present in the frequency domain representations of the one or more temporal frames of the audible signal data based on the feature characterization set. To that end, the VSPD module 130 is coupled to receive a respective feature characterization set from the feature characterization module 120 for each VSP-specific ROI characterizing the frequency domain representation of the one or more temporal frames of the audible signal data. The VSPD module 130 includes a VSPD management controller 131, a RNN instantiator module 132, a RNN module 140, and a detector module 160. Those of ordinary skill in the art will appreciate from the present disclosure that the functions of the four aforementioned modules can be combined into one or more modules and/or further sub-divided into additional sub-modules; and, that the four aforementioned modules are provided as merely one example configuration of the various aspects and functions described herein.

The VSPD management controller 131 is coupled to each of the RNN instantiator module 132, the RNN module 140, and the detector module 160 in order to coordinate the operation of the VSPD module 130. More specifically, the VSPD management controller 131 is connected to provide the RNN instantiator module 132 with control commands and/or instructions that direct the RNN instantiator module 132 to instantiate a RNN for each of a pre-specified set of VSPs and one or more detectors. The VSPD management controller 131 is also coupled to the RNN instantiator module 132 in order to receive feedback data and tracking of the RNN weights from the training module 150 (described below). The VSPD management controller 131 is also connected to provide the RNN module 140 and the detector module 160 with enable and gating commands and/or instructions in order to manage the coordinated operation of each.

The RNN instantiator module 132 is coupled to both the RNN module 140 and the detector module 160. The RNN instantiator module 132, upon receiving instructions from the VSPD management controller 131, directs the RNN module 140 to instantiate a respective RNN 140-1, 140-2, ..., 140-*n*, for each of a pre-specified set of VSPs specified by the VSPD management controller 131 for a detection cycle. In other words, a separate VSP-specific RNN is employed for each VSP that can be detected during a detection cycle, based on a feature characterization set provided by the feature characterization module 120. Having a respective VSP-specific RNN 140-1, 140-2, ..., 140-*n* for each VSP limits the size of each VSP-specific RNN 140-1, 140-2, ..., 140-*n*. In some implementations, the combined complexity of a number of VSP-specific RNNs 140-1, 140-2, ..., 140-*n* is less than a single RNN that is configured to simultaneously detect the presence of one or more of an entire pre-specified sets of VSPs. In some implementations, the combined memory used by a number of VSP-specific RNNs 140-1, 140-2, ..., 140-*n* is less than that used by a single RNN that is configured to simultaneously detect the presence of one or more of an entire pre-specified sets of VSPs.

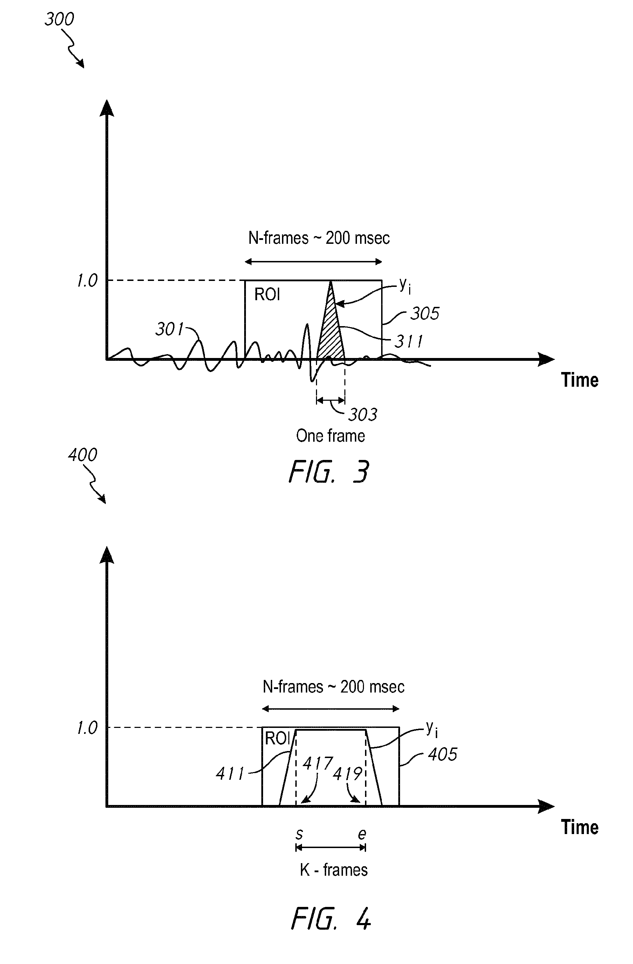

The RNN module 140 is configured to provide a VSP-specific RNN 140-1, 140-2, ..., 140-*n* for each of a pre-specified set of VSP. The RNN instantiator module 132 provides the RNN module 140 with sets of RNN weights provided by the training module for each of the respective RNNs 140-1, 140-2, ..., 140-*n*, and respective feature characterization sets for the feature characterization module 120. In some implementations, each RNN 140-1, 140-2, ..., 140-*n* is configured so that the output of the RNN is substantially equal to a first constant (e.g., "1") when a respective VSP is detected within the corresponding ROI associated with that VSP, and is substantially equal to the second constant (e.g., "0") everywhere except within the ROI for the corresponding VSP across one or more temporal frames. In other words, as described below with reference to Figure 3 and 4, the output of a corresponding VSP-specific RNN is a first constant somewhere within the ROI in order to indicate a positive detection result, and a second constant outside of the VSP-specific RNN where the respective VSP cannot be detected.

Similarly, in some implementations, the RNN instantiator module 132 directs the detector module 160 to instantiate a respective detector 160-1, 160-2, ..., 160-*n*, for each of a pre-specified set of VSPs specified by the VSPD management controller 131 for a detection cycle. In some implementations, each of one or more of the respective detectors 160-1, 160-2, ..., 160-*n*, is configured to determine whether or not a respective RNN has produced a detection output. In some implementations, a positive detection result occurs when the output of a respective RNN breaches a threshold value relative to the first constant or is equal to the aforementioned first constant, thus indicating the presence of a VSP. In some implementations, a single binary output is provided to indicate the presence or absence of a particular VSP by a respective one of the detectors 160-1, 160-2, ..., 160-*n*.

In some implementations, once the detection cycle concludes, the RNN instantiator module 132 directs both the RNN module 140 and the detector module 160 to delete or invalidate the respective RNNs 140-1, 140-2, ..., 140-*n* and detectors 160-1, 160-2, ..., 160-*n*.

The training module 150 is configured to generate RNN weights for each of the RNNs 140-1, 140-2, ..., 140-*n* instantiated by the RNN instantiator module 132. To that end, the training module 150 includes a training data set 151 stored in a non-transitory memory, a pre-specified set of VSPs (VSP set) 152 stored in a non-transitory memory, a partial derivative determination module 155 and a RNN weight generator 156. The function of the partial derivative determination module 155 and the RNN weight generator 156 are described below with reference to Figures 2A and 2B, and Figures 3 and 4.

With continued reference to Figure 1, Figure 3 is a performance diagram 300 illustrating an example output from a VSP-specific RNN configured to provide a detection output within a single frame according to some implementations. As shown in Figure 3, in some implementations, a VSP-specific ROI 305 is defined across N-frames of audible signal data 301. In some implementations, the N-frames have a collective duration of approximately 200 msec. In some implementation, if the corresponding VSP is present within the VSP-specific ROI 305 of the audible signal data 301, the respective VSP-specific RNN will produce a detection output $y_i$ (spike 311) that lasts for the duration of one frame within the VSP-specific ROI 305. Those of ordinary skill in the art will appreciate from the present disclosure that the input audible signal data 301 and output $y_i$ have been simplified for illustrative purposes.

In the case of a RNN that is restricted to provide a detection output $y_i$ (spike 311) lasting one time frame within a ROI (as shown in Figure 3), the probability of obtaining the spike anywhere within the ROI defined by $i = [t_{min}, t_{max}]$ is:

$$P_{det} = \sum_{i=t_{min}}^{t_{max}} y_i \prod_{\substack{j=0 \\ j \neq i}}^{N} (1 - y_j) = \sum_{i=t_{min}}^{t_{max}} P_i \qquad (3)$$

where,

$$P_i \equiv y_i \prod_{\substack{j=0 \\ j \neq i}}^{N} (1 - y_j) \qquad (4)$$

and $y_i$ is the output of the RNN at time frame $i$, $i = [t_{min}, t_{max}]$. The probability $P_{null}$ of obtaining a null output outside of the ROI when the sequence is not present is provided by equation (5) as follows:

$$P_{null} = \prod_{j=0}^{L'} (1 - y_j) \qquad (5)$$

where the product is taken over the $L'$ frames that are outside of the ROI.

In some implementations, the performance targets during training of the RNN are to maximize $P_{det}$ within the ROI and $P_{null}$ outside of the ROI, which is equivalent to minimizing $-\ln(P_{det})$ and $-\ln(P_{null})$, where $\ln()$ denotes the natural logarithm function. This extreme occurs when the first partial derivative of $P_{null}$ and $P_{det}$ relative to each $y_i$ are both equal to zero. The first partial derivative of $P_{det}$ relative to each $y_i$ is equal to:

$$\frac{-\partial(-\ln P_{det})}{\partial y_i} = \frac{P_i}{P_{det}} \frac{1}{y_i} - \frac{(P_{det} - P_i)}{P_{det}} \frac{1}{(1 - y_i)} \qquad (6)$$

Since the term $(P_{det} - P_i)$ can be difficult to calculate due to underflow errors, the following equivalent form is preferred in some implementations:

$$\frac{-\partial(-\ln P_{det})}{\partial y_i} = \frac{P_i}{P_{det}} \frac{1}{y_i(1 - y_i)} - \frac{1}{(1 - y_i)} \qquad (7)$$

Equation (7) provides a representation of the error signal that is received by the RNN during standard backpropagation training for the frames within the ROI. For frames outside the ROI the partial derivative of $P_{null}$ is:

$$\frac{-\partial(-\ln P_{null})}{\partial y_i} = -\frac{1}{(1 - y_i)} \qquad (8)$$

With continued reference to Figure 1, Figure 4 is a performance diagram 400 illustrating an example output of a VSP-specific RNN configured to provide a detection output spanning two or more frames according to some implementations. As shown in Figure 4, in some implementations, a VSP-specific ROI 405 is defined across N-frames of audible signal data. In some implementations, the N-frames have a collective duration of approximately 200 msec. In some implementation, if the corresponding VSP is present within the VSP-specific ROI 405 of the audible signal data 401, the respective VSP-specific RNN will produce a detection output $y_i$ (411) that lasts for a duration of two or more frames within the VSP-specific ROI 405. Those of ordinary skill in the art will appreciate from the present disclosure that the input audible signal data and output $y_i$ have been simplified for illustrative purposes.

In such implementations, the probability of obtaining a detection output $y_i$ (411) starting at frame $t_{min+s}$ (417) and ending at $t_{min+e}$ (419) within the ROI 405 of length L can be defined as follows:

$$P_{det} = \sum_{s=0}^{L} \sum_{e=s}^{L} \prod_{i=s}^{e} y_i \prod_{i=0}^{s-1}(1 - y_i) \prod_{i=e+1}^{L}(1 - y_i) = \sum_{s=0}^{L} \sum_{e=s}^{L} P_{s,e} \qquad (9)$$

where,

$$P_{s,e} \equiv \prod_{i=s}^{e} y_i \prod_{i=0}^{s-1}(1 - y_i) \prod_{i=e+1}^{L}(1 - y_i) \qquad (10)$$

The first partial derivative of $P_{det}$ relative to each $y_i$ is provided by equation (11) as follows:

$$\frac{-\partial(-\ln P_{det})}{\partial y_i} = \sum_{\substack{s \le i \\ e \ge i}} P_{s,e} \frac{1}{P_{det}} \frac{1}{y_i(1-y_i)} - \frac{1}{(1-y_i)} \qquad (11)$$

The calculation of $P_{null}$ using equation (8) remains unchanged.

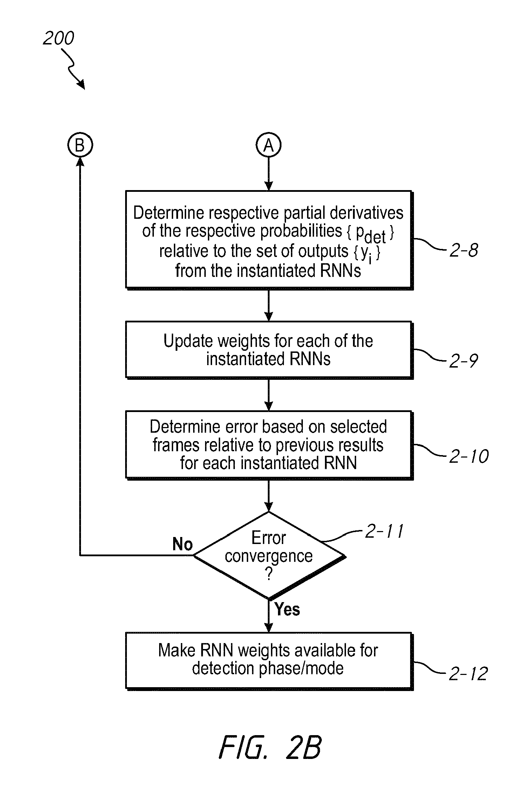

Figures 2A and 2B together include a flowchart representation of a method 200 of training a RNN detection system to detect voiced sound patterns according to some implementations. In some implementations, with continued reference to Figure 1, the method 200 is performed by the training module 150 in coordination with the ROI windowing module 110, the feature characterization module 120, and the VSPD module 160. In training mode(s), the MUX 106 couples the training module 150 to the ROI windowing module 111, and decouples the frame buffer 105. Briefly, the method 200 includes imposing a corresponding region of interest (ROI) for a particular voiced sound pattern (VSP) on one or more frames of training data; determining an output of a respective VSP-specific RNN at least based on a feature characterization set associated with the corresponding ROI of the one or more frames of training data; updating weights for the respective VSP-specific RNN based on a partial derivative function of the output of the respective VSP-specific RNN; and continuing to process training data and updating weights until a set of updated weights satisfies an error convergence threshold.

As represented by block 2-1, the method 200 includes determining a ROI for each VSP specified for a detection cycle. In some implementations, as represented by block 2-1a, determining a ROI for each VSP includes identifying a respective one or more signature features included in the frequency domain representations of one or more temporal frames that define each VSP. For example, with reference to Figure 1, the feature characterization module 120 is used to identify one or more signature features for each VSP. A more detailed example of how to identify one or more signature features for each VSP relative to others is described below with reference to Figure 7. In some implementations, as represented by block 2-1b, determining a ROI for a particular VSP includes selecting the last portion $\Delta t$ of that VSP. In some use cases, with a limited number of VSPs, the last 200 msec of a particular VSP is sufficient to distinguish that particular VSP from others.

As represented by block 2-2, the method 200 includes instantiating a respective VSP-specific RNN, for each VSP, with initial weight and states. For example, with reference to Figure 1, The RNN instantiator module 132, upon receiving instructions from the VSPD management controller 131, directs the RNN module 140 to instantiate a respective RNN 140-1, 140-2, ..., 140-*n*, for each of a pre-specified set of VSPs specified by the VSPD management controller 131. As represented by block 2-3, the method 200 includes obtaining (i.e., receiving and/or retrieving) a training data set. In some implementations, as represented by block 2-3a, obtaining the training data set includes access training data within files stored in a non-transitory memory (e.g., training data set in non-transitory memory 151). As represented by block 2-4, the method 200 includes selecting a frequency domain representation of time series frames from the training data set. As represented by block 2-5, the method 200 includes imposing a respective ROI on the selected frames by using a windowing module. For example, with reference to Figure 1, the Hanning windowing module 111 is used to impose the respective ROIs for the corresponding VSPs on the frequency domain representations of the selected frames of training data. As represented by block 2-6, the method 200 includes analyzing the selected frames in order to obtain feature sets characterizing the respective ROIs for the corresponding VSPs. For example, with reference to Figure 1, the feature characterization module 120 is used to assess and obtain the characteristics of features (i.e., a feature characterization set) in each of the frequency domain representations of the one or more frames of the training data. As represented by block 2-7, the method 200 includes determining the respective outputs $\{y_i\}$ from the corresponding set of VSP-specific RNNs based on the feature characterization set. For example, with reference to Figure 1, the set of VSP-specific RNNs 140-1, 140-2, ..., 140-*n* are operated to derive corresponding VSP-specific outputs $\{y_i\}$ at least based on the feature characterization set and the frequency domain representations of the one or more frames of the training data.

As represented by block 2-8, the method 200 includes determining respective partial derivatives of the respective probabilities $\{P_{det}\}$ relative to the set of VSP-specific outputs $\{y_i\}$ provided by the set of VSP-specific RNNs. For example, with reference to Figure 1, the partial derivative determination module 155 is used to determine respective partial derivatives of the respective probabilities $\{P_{det}\}$ relative to the set of VSP-specific outputs $\{y_i\}$ provided by the instantiated set of VSP-specific RNNs 140-1, 140-2, ..., 140-*n*. As represented by block 2-9, the method 200 includes updating the weights for each of the VSP-specific RNNs. For example, with reference to Figure 1, the RNN weight generator 156 is used to calculate updates weights. The updated weights are provided to the RNN instantiator module 132, which provides the updated weights to the previously instantiated set of VSP-specific RNNs 140-1, 140-2, ..., 140-*n*.

As represented by block 2-10, the method 200 includes determining an error value based on the selected frames relative to previous results for each instantiated RNN. As represented by block 2-11, the method 200 includes determining whether there is error convergence for each RNN. In some implementations, determining error convergence include determining whether the error produced by using the RNN with the updated weights satisfies an error convergence threshold. In other words, the updated weight are evaluated by operating the RNN with more training data in order to determine if the RNN is producing reliable detection results. In some implementations, when there is error convergence for a particular RNN ("Yes" path from block 2-11), the training for that RNN is substantially complete. As such, as represented by block 2-12, the method 200 includes making the RNN weights available for a detection mode in which the VSP-specific RNN is used to detect the presence of the corresponding VSP in noisy real-valued audible signal data. On the other hand, with reference to block 2-11, if there error has not converged ("No" path from block 2-11), the method includes circling back to the portion of the method 200 represented by bloc 2-4, where additional training data can be considered.

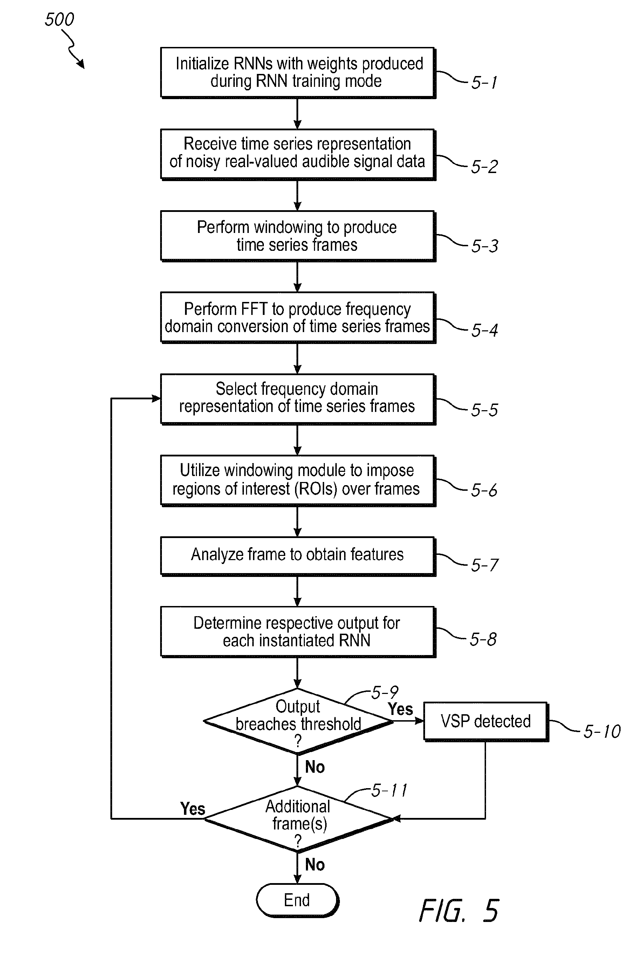

Figure 5 is a flowchart representation of a method 500 of detecting VSPs using a RNN detection system in accordance with some implementations. In some implementations, with continued reference to Figure 1, the method 500 is performed by the combination of the frame buffer 105, the ROI windowing module 110, the feature characterization module 120, and the VSPD module 160. In some implementations, the method 500 is also performed in coordination with a suitable combination of the microphone 101, the time series conversion module 103, and the spectrum conversion module 104. In detection mode(s), the MUX 106 couples the frame buffer 105 to the ROI windowing module 111, and decouples the training module 150. Briefly, the method 500 includes imposing a respective ROI on at least a portion of each of one or more temporal frames of audible signal data, determining a feature characterization set within at least the ROI imposed on the at least a portion of each of one or more temporal frames of audible signal data, and detecting whether or not the corresponding VSP is present in the one or more frames of audible signal data by determining an output of a VSP-specific RNN based on the feature characterization set.

As represented by block 5-1, the method 500 includes initializing each of one or more VSP-specific RNNs with weights produced during a training mode. For example, with reference to Figure 1, the RNN instantiator module 132 provides the respective sets of weights to the instantiated set of VSP-specific RNNs 140-1, 140-2, ..., 140-*n*. As represented by block 5-2, the method 500 includes receiving a time series representation of noisy real-valued audible signal data. For example, with reference to Figure 1, the microphone 101 receive and convert an audible signal into an electronic signal that can be stored in a non-transitory memory. As represented by block 5-3, the method 500 includes performing windowing to produce time series frames. For example, with reference to Figure 1, the times series conversion module 103 is configured to mark and separate one or more temporal frames or portions of the audible signal data for times $t_1$, $t_2$,..., $t_n$. As represented by block 5-4, the method 500 includes performing an FFT to produce a frequency domain conversion of the time series frames. For example, with reference to Figure 1, the spectrum conversion module 104 operates to generate a corresponding frequency domain representation for each of the one or more temporal frames of audible signal data.

As represented by block 5-5, the method 500 includes selecting a frequency domain representation of the one or more temporal frames of audible signal data. As represented by block 5-6, the method 500 includes imposing a respective ROI on the selected frames by using a windowing module. For example, with reference to Figure 1, the Hanning windowing module 111 is used to impose the respective ROIs for the corresponding VSPs on the frequency domain representations of the selected frames of audible signal data. As represented by block 5-7, the method 500 includes, analyzing the select frames in order to obtain feature sets characterizing the respective ROIs for the corresponding VSPs. For example, with reference to Figure 1, the feature characterization module 120 is used to assess and obtain the characteristics of features in each of the frequency domain representations of the one or more frames of the audible signal data. As represented by block 5-8, the method 500 includes determining the respective outputs $\{y_i\}$ from the corresponding set of VSP-specific RNNs. For example, with reference to Figure 1, the set of VSP-specific RNNs 140-1, 140-2, ..., 140-*n* are operated to derive corresponding VSP-specific outputs $\{y_i\}$ based on the frequency domain representations of the one or more frames of the audible signal data.

As represented by block 5-9, the method 500 includes determining whether or not each of the respective VSP-specific outputs $\{y_i\}$ breaches as a corresponding threshold, which indicates the detection of a corresponding VSP. For example, with reference to Figure 1, each of the respective detectors 160-1, 160-2, ..., 160-*n* is operates in order to determine if a corresponding one of the VSP-specific outputs $\{y_i\}$ breaches a threshold value, and thus indicates the presence of a respective VSP. In some implementations, a positive detection result occurs when the output of a respective RNN breaches a threshold value or is equal to the aforementioned first constant, thus indicating the presence of a VSP. If a threshold is breached for one of the VSP-specific RNNs ("Yes" path from block 5-9), as represented by block 5-10, the method 500 includes providing a positive detection result. For example, with reference to Figure 1, a single binary output is provided to indicate the presence or absence of a particular VSP by a respective one of the detectors 160-1, 160-2, ..., 160-*n*. If a threshold is breached for one of the VSP-specific RNNs ("No" path from block 5-9), as represented by block 5-11, the method 500 includes determining whether or not there are additional frequency domain representations of temporal frames of audible signal data to consider (e.g., in the frame buffer 105). In some implementations, the method 500 also includes providing a negative detection result (meaning that the particular VSP has not yet been detected). If there are additional frames ("Yes" path from block 5-11), the method circles back to the portion of the method 500 represented by block 5-5. On the other hand, if there are no additional frames ("No" path from block 5-11), the method 500 ends.

Figure 6 is a schematic diagram of a RNN detection system 600 operable to detect voiced sound patterns in accordance with some implementations. The RNN detection system 600 illustrated in Figure 6 is similar to and adapted from the RNN detection system 100 illustrated in Figure 1. Elements common to each include common reference numbers, and only the differences between Figures 1 and 6 are described herein for the sake of brevity. Moreover, while pertinent features are illustrated, those skilled in the art will appreciate from the present disclosure that various other features have not been illustrated for the sake of brevity and so as not to obscure more pertinent aspects of the example implementations disclosed herein.

To that end, as a non-limiting example, in some implementations the RNN detection system 600 includes one or more processing units (CPU's) 612, one or more output interfaces 609, an allocation of programmable logic and/or non-transitory memory (local storage) 601, a microphone 101, a frame buffer 105, a training data set stored in non-transitory memory 151, a pre-specified VSP set stored in a non-transitory memory 152, and one or more communication buses 610 for interconnecting these and various other components not illustrated for the sake of brevity.

In some implementations, the communication buses 610 include circuitry that interconnects and controls communications between components. In various implementations the programmable logic and/or non-transitory memory 601 includes a suitable combination of a programmable gate array (such as an FPGA or the like), high-speed random access memory, such as DRAM, SRAM, DDR RAM or other random access solid state memory devices; and may include non-volatile memory, such as one or more magnetic disk storage devices, optical disk storage devices, flash memory devices, or other non-volatile solid state storage devices. The programmable logic and/or non-transitory memory 601 optionally includes one or more storage devices remotely located from the CPU(s) 612. The programmable logic and/or non-transitory memory 601 comprises a non-transitory computer readable storage medium. In some implementations, the programmable logic and/or non-transitory memory 601 includes the following programs, modules and data structures, or a subset thereof including an optional programmable logic controller 611, time series conversion logic 603, spectrum conversion logic 604, ROI windowing logic 610, feature characterization logic 620, a VSPD module 630, and a training module 650.

The programmable logic controller 611 includes procedures for handling various basic system services and for performing hardware dependent tasks. In some implementations, the programmable logic controller 611 includes some or all of an operating system executed by the CPU(s) 612.

In some implementations, the time series conversion logic 603 is configured to generate temporal frames of audible signal data. To that end, in some implementations, the time series conversion logic 603 includes heuristics and metadata 603a.

In some implementations, the spectrum conversion logic 604 is configured to generate a corresponding frequency domain representation for each of the one or more temporal frames. To that end, in some implementations, the spectrum conversion logic 604 includes heuristics and metadata 604a.

In some implementations, the ROI windowing logic 610 is configured to impose one or more respective regions of interest on each of the frequency domain representations of the one or more temporal frames of audible signal data. To that end, in some implementations, the ROI windowing logic 610 includes heuristics and metadata 610a.

In some implementations, the feature characterization logic 620 is configured to assess and obtain the characteristics of features in each of the frequency domain representations of the one or more frames of the audible signal data. To that end, for example, the feature characterization logic 620 includes cepstrum analysis logic 621, pitch estimation logic 622, mel-frequency cepstrum coefficients analysis logic 623, SNR estimation logic 624, voice strength estimation logic 625, and voice period variance estimation sub-module 626.

In some implementations, the VSPD module 630 is configured to detect whether or not each of one or more VSPs are present in the frequency domain representations of the one or more temporal frames of the audible signal data. To that end, for example, the VSPD module 630 includes VSPD management controller logic 631, RNN instantiator logic 632, RNN module logic and local storage 640, and detection module logic and local storage 660.

In some implementations, the training module 650 is configured to generate RNN weights for each of the RNNs instantiated by the RNN instantiator logic 632. To that end, the training module 650 include weight generation logic 656 and partial derivative determination logic 655.

Figure 7 is a flowchart representation of a method 700 of determining respective ROIs for two or more pre-specified voiced sound patterns in accordance with some implementations. In some implementations, with continued reference to Figure 1, the method 200 is performed by the training module 150 in coordination with the ROI windowing module 110, the feature characterization module 120, and the VSPD module 160. In training mode(s), the MUX 106 couples the training module 150 to the ROI windowing module 111, and decouples the frame buffer 105. Briefly, the method 700 includes determining a feature characterization set associated with one or more temporal frames including a VSP, comparing the feature characterization set for the VSP with other VSPs in order to identify one or more distinguishing frames and features of the VSP, and generating a corresponding ROI for the VSP based on the identified one or more distinguishing frames and features of the VSP.

As represented by block 7-1, the method 700 includes selecting a VSP from a pre-specified set. For example, with reference to Figure 1, the pre-specified VSP set is stored in the non-transitory memory 152. As represented by block 7-2, the method 700 includes performing windowing to produce time series frames of the selected VSP. As represented by block 7-3, the method 700 includes performing an FFT (or the like) in order to generate a corresponding frequency domain representation for each of the one or more times series frames. As represented by block 7-4, the method 700 includes analyzing the frequency domain representations of the one or more time series frames in order to obtain features of the selected VSP. For example, with reference to Figure 1, the feature characterization module 120 is configured to assess and obtain the characteristics of features in each of the frequency domain representations. As represented by block 7-5, the method 700 includes comparing the features of the selected VSP against other VSPs in order to identify distinguishing frames and features of each. As represented by block 7-6, the method 700 includes generating a respective ROI for the selected VSP based on the identified distinguishing frames and features.

While various aspects of implementations within the scope of the appended claims are described above, it should be apparent that the various features of implementations described above may be embodied in a wide variety of forms and that any specific structure and/or function described above is merely illustrative. Based on the present disclosure one skilled in the art should appreciate that an aspect described herein may be implemented independently of any other aspects and that two or more of these aspects may be combined in various ways. For example, an apparatus may be implemented and/or a method may be practiced using any number of the aspects set forth herein. In addition, such an apparatus may be implemented and/or such a method may be practiced using other structure and/or functionality in addition to or other than one or more of the aspects set forth herein.

It will also be understood that, although the terms "first," "second," etc. may be used herein to describe various elements, these elements should not be limited by these terms. These terms are only used to distinguish one element from another. For example, a first contact could be termed a second contact, and, similarly, a second contact could be termed a first contact, which changing the meaning of the description, so long as all occurrences of the "first contact" are renamed consistently and all occurrences of the second contact are renamed consistently. The first contact and the second contact are both contacts, but they are not the same contact.

The terminology used herein is for the purpose of describing particular embodiments only and is not intended to be limiting of the claims. As used in the description of the embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

**Claims**

**1.** A method of detecting voiced sound patterns in audible signal data, the method comprising:

imposing a respective region of interest (ROI) on at least a portion of each of one or more temporal frames of audible signal data, wherein the respective ROI is **characterized by** one or more relatively distinguishable features of a corresponding voiced sound pattern (VSP);
determining a feature characterization set within at least the ROI imposed on the at least a portion of each of one or more temporal frames of audible signal data; and
detecting whether or not the corresponding VSP is present in the one or more frames of audible signal data by determining an output of a VSP-specific RNN, trained to provide a detection output, at least based on the feature characterization set.

**2.** The method of claim 1 further comprising generating the temporal frames of the audible signal data by marking and separating sequential portions from a stream of audible signal data.

**3.** The method of claim 1 or 2 further comprising generating a corresponding frequency domain representation for each of the one or more temporal frames of the audible signal data, wherein the feature characterization set is determined from the frequency domain representations.

**4.** The method of claim 1, 2 or 3 wherein the respective ROI for the corresponding VSP is the portion of one or more temporal frames where the spectrum of the corresponding VSP has relatively distinguishable features as compared to others in a set of VSPs, optionally, wherein the respective ROI is imposed using a windowing module.

**5.** The method of claim 1, 2, 3 or 4 wherein the feature characterization set includes at least one of a spectra value, cepstra value, mel-scaled cepstra coefficients, a pitch estimate value, a signal-to-noise ratio (SNR) value, a voice strength estimate value, and a voice period variance estimate value.

**6.** The method of claim 1, 2, 3, 4, or 5 wherein an output of the VSP-specific RNN is a first constant somewhere within the respective ROI in order to indicate a positive detection result, and a second constant outside of the VSP-specific RNN where the respective VSP is more difficult to detect or generally cannot be detected in average frames, optionally, wherein a positive detection result occurs when the output of the VSP-specific RNN breaches a threshold value relative to the first constant.

**7.** A system operable to detect voiced sound patterns, the device comprising:

a windowing module configured to impose a respective region of interest (ROI) on at least a portion of each of one or more temporal frames of audible signal data, wherein the respective ROI is **characterized by** one or more relatively distinguishable features of a corresponding voiced sound pattern (VSP);
a feature characterization module configured to determine a feature characterization set within at least the ROI imposed on the at least a portion of each of one or more temporal frames of audible signal data; and
VSP detection (VSPD) module configured to detect whether or not the corresponding VSP is present in the one or more frames of audible signal data by determining an output of a VSP-specific RNN, trained to provide a detection output, at least based on the feature characterization set.

**8.** The system of claim 7 further comprising a time series conversion module configured to generate two or more temporal frames of audible signal data from a stream of audible signal data.

**9.** The system of claim 7 or 8 further comprising a spectrum conversion module configured to generate a corresponding frequency domain representation for each of the one or more temporal frames of the audible signal data, wherein the feature characterization set is determined from the generated frequency domain representations, optionally, wherein the respective ROI for the corresponding VSP is the portion of one or more temporal frames where the spectrum of the corresponding VSP has relatively distinguishable features as compared to others in a set of VSPs.

**10.** The system of claim 7, 8 or 9, wherein the feature characterization module includes one or more of a respective number of sub-modules that are each configured to generate a corresponding one of a spectra value, cepstra value, mel-scaled cepstra coefficients, a pitch estimate value, a signal-to-noise ratio (SNR) value, a voice strength estimate value, and a voice period variance estimate value.

**11.** The system of claim 7, 8, 9 or 10, wherein an output of the VSP-specific RNN is a first constant somewhere within the respective ROI in order to indicate a positive detection result, and a second constant outside of the VSP-specific RNN where the respective VSP cannot be detected.

**12.** The system of claim 7, 8, 9, 10 or 11, wherein the VSPD module comprises a RNN module that is configured to provide a corresponding VSP-specific RNN for each of a pre-specified set of VSP.

**13.** The system of claim 7, 8, 9, 10, 11 or 12, wherein a positive detection result occurs when the output of the VSP-specific RNN breaches a threshold value relative to the first constant.

**14.** A method of training a recurrent neural network (RNN) in order to detect a voiced sound pattern, the method comprising:

imposing a corresponding region of interest (ROI) for a particular voiced sound pattern (VSP) on one or more frames of training data;

determining an output of a respective VSP-specific RNN based on a feature characterization set associated with the corresponding ROI of the one or more frames of training data;

updating weights for the respective VSP-specific RNN based on a partial derivative function of the output of the respective VSP-specific RNN; and

continuing to process training data and updating weights until a set of updated weights satisfies an error convergence threshold.

15. The method of claim 14 further comprising obtaining the corresponding ROI by:

determining a feature characterization set associated with one or more temporal frames including a voiced sound pattern (VSP);

comparing the feature characterization set for the VSP with other VSPs in order to identify one or more distinguishing frames and features of the VSP; and

generating a corresponding ROI for the VSP based on the identified one or more distinguishing frames and features of the VSP.

16. The method of claim 14 or 15 further comprising:

generating a corresponding frequency domain representation for each of the one or more temporal frames of the training data; and

determining a feature characterization set within at least the ROI imposed on the one or more frames of training data, wherein the feature characterization set is determined from the frequency domain representations.

17. The method of claim 14, 15 or 16, wherein wherein the feature characterization set includes at least one of a spectra value, cepstra value, mel-scaled cepstra coefficients, a pitch estimate value, a signal-to-noise ratio (SNR) value, a voice strength estimate value, and a voice period variance estimate value.

FIG. 1

*200*

Determine region of interest (ROI)
for each voiced sound pattern (VSP)

*2-1a* — Identify signature feature

*2-1b* — Select last Δt of VSP

~ *2-1*

↓

Instantiate a respective RNN for
each VSP with initial weights & states

~ *2-2*

↓

Receive/retrieve training data set

*2-3a* — Access files with data frames

~ *2-3*

↓

Ⓑ → Select Frequency Domain
representation of times series
frames from training data set

~ *2-4*

↓

Utilize windowing module to
impose respective ROI on selected
frames for each instantiated RNN

~ *2-5*

↓

Analyze selected frames to
obtain feature sets characterizing
ROI's of selected frames

~ *2-6*

↓

Determine respective outputs $\{y_i\}$
for each instantiated RNN

~ *2-7*

↓

Ⓐ

*FIG. 2A*

FIG. 2B

*300*

N-frames ~ 200 msec

1.0

ROI

$y_i$

*305*

*301*

*311*

Time

One frame

*303*

FIG. 3

*400*

N-frames ~ 200 msec

1.0

ROI

$y_i$

*405*

*411*

*417* *419*

s    e

K - frames

Time

FIG. 4

*500*

```
┌─────────────────────────────────┐
│ Initialize RNNs with weights     │
│ produced during RNN training mode│──5-1
└─────────────────────────────────┘
              │
              ▼
┌─────────────────────────────────┐
│ Receive time series              │
│ representation of noisy          │──5-2
│ real-valued audible signal data  │
└─────────────────────────────────┘
              │
              ▼
┌─────────────────────────────────┐
│ Perform windowing to produce     │
│ time series frames               │──5-3
└─────────────────────────────────┘
              │
              ▼
┌─────────────────────────────────┐
│ Perform FFT to produce frequency │
│ domain conversion of time series │──5-4
│ frames                           │
└─────────────────────────────────┘
              │
              ▼
┌─────────────────────────────────┐
│ Select frequency domain          │
│ representation of time series    │──5-5
│ frames                           │
└─────────────────────────────────┘
              │
              ▼
┌─────────────────────────────────┐
│ Utilize windowing module to      │
│ impose regions of interest (ROIs)│──5-6
│ over frames                      │
└─────────────────────────────────┘
              │
              ▼
┌─────────────────────────────────┐
│ Analyze frame to obtain features │──5-7
└─────────────────────────────────┘
              │
              ▼
┌─────────────────────────────────┐
│ Determine respective output for  │
│ each instantiated RNN            │──5-8
└─────────────────────────────────┘
              │
              ▼
         Output                5-9
    breaches threshold  ──Yes──▶  VSP detected ──5-10
         ?
         │
         No
         │
         ▼
    Additional           5-11
Yes── frame(s) ?
         │
         No
         │
         ▼
       ( End )
```

*FIG. 5*

600

| | Programable Logic's & Local Storage | _601_ |
|---|---|---|
| | Programmable Logic Controller | 611 |
| | Time Series Conv. Logic | 603 |
| |     Heuristics & Metadata | 603a |
| | Frequency Conv. Logic | 604 |
| |     Heuristics & Metadata | 604a |
| | ROI Windowing Logic | 610 |
| |     Heuristics & Metadata | 610a |
| | Feature Calc. Logic | 620 |
| |     Cepstrum Logic | 621 |
| |     Pitch Estimation Logic | 622 |
| |     MFCC | 623 |
| |     SNR Estimation Logic | 624 |
| |     Voice Strength Est. Logic | 625 |
| |     Voice Period Variance Logic | 626 |
| | VSPD Module | 630 |
| |     VSPD Mngt Controller | 631 |
| |     RNN Initiation Logic | 632 |
| |     RNN Module Logic & Local Storage | 640 |
| |     Detection Module Logic & Local storage | 660 |
| | Training Module | 650 |
| |     Weight Gen Logic | 656 |
| |     Partial Derivative Logic | 655 |

101 — Mic

609 — Output Interface

612 — CPU(s)

610

Training Data 151

VSP Set 152

Frame Buffer 105

FIG. 6

*700*

```
┌─────────────────────────────────────┐
│   Select a VSP from pre-specified set │──── 7-1
└─────────────────────────────────────┘
                  │
                  ▼
┌─────────────────────────────────────┐
│      Perform windowing to produce     │──── 7-2
│    time series frames of selected VSP │
└─────────────────────────────────────┘
                  │
                  ▼
┌─────────────────────────────────────┐
│     Perform FFT to produce frequency  │──── 7-3
│      domain conversion of frames      │
└─────────────────────────────────────┘
                  │
                  ▼
┌─────────────────────────────────────┐
│ Analyze frequency domain representation│──── 7-4
│    of frames to obtain features of VSP │
└─────────────────────────────────────┘
                  │
                  ▼
┌─────────────────────────────────────┐
│   Compare against other VSPs to identify│──── 7-5
│     distinguishing frames & features  │
└─────────────────────────────────────┘
                  │
                  ▼
┌─────────────────────────────────────┐
│   Generate respective ROI for VSP based│──── 7-6
│ on identified distinguishing frames & features│
└─────────────────────────────────────┘
```

FIG. 7

Europäisches
Patentamt

European
Patent Office

Office européen
des brevets

# EUROPEAN SEARCH REPORT

Application Number

EP 15 15 4579

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GRAVES ALEX ET AL: "Speech recognition with deep recurrent neural networks", 2013 IEEE INTERNATIONAL CONFERENCE ON ACOUSTICS, SPEECH AND SIGNAL PROCESSING (ICASSP); VANCOUCER, BC; 26-31 MAY 2013, INSTITUTE OF ELECTRICAL AND ELECTRONICS ENGINEERS, PISCATAWAY, NJ, US, 26 May 2013 (2013-05-26), pages 6645-6649, XP032508511, ISSN: 1520-6149, DOI: 10.1109/ICASSP.2013.6638947 [retrieved on 2013-10-18] * abstract * * * page 6645, right-hand column, paragraph 2 - page 6646, left-hand column, paragraph 1 * * page 6646, right-hand column, paragraph 2 - page 6647, right-hand column, paragraph 2 * * figure 1 * | 1-17 | INV. G10L25/30 G10L15/06 G10L15/08 |
| A | KOIZUMI T ET AL: "Recurrent neural networks for phoneme recognition", SPOKEN LANGUAGE, 1996. ICSLP 96. PROCEEDINGS., FOURTH INTERNATIONAL CONFERENCE ON PHILADELPHIA, PA, USA 3-6 OCT. 1996, NEW YORK, NY, USA,IEEE, US, vol. 1, 3 October 1996 (1996-10-03), pages 326-329, XP010237711, DOI: 10.1109/ICSLP.1996.607119 ISBN: 978-0-7803-3555-4 * abstract * * * page 326, right-hand column, paragraph 3 - page 327, left-hand column, paragraph 5 * * figures 1-3 * | 1,7,14 | TECHNICAL FIELDS SEARCHED (IPC) G10L |

-/--

The present search report has been drawn up for all claims

| Place of search | Date of completion of the search | Examiner |
|---|---|---|
| Munich | 29 April 2015 | Greiser, Norbert |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                                                 
& : member of the same patent family, corresponding
   document

EPO FORM 1503 03.82 (P04C01)

Europäisches
Patentamt

European
Patent Office

Office européen
des brevets

**EUROPEAN SEARCH REPORT**

Application Number

EP 15 15 4579

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 667 107 A1 (SONY CORP [JP]) 7 June 2006 (2006-06-07) * abstract * * * page 7, paragraph [0058]-[0060] * * page 24, paragraph [0289] - page 25, column [0305] * * figures 2,8,22-25 * ----- | 1,7,14 | |
| A | US 2013/262096 A1 (WILHELMS-TRICARICO REINER [US] ET AL) 3 October 2013 (2013-10-03) * abstract * * * page 1, paragraph [0003] * * page 6, paragraph [0072] - page 7, paragraph [0075]; figure 3 * ----- | 1,7,14 | |

TECHNICAL FIELDS
SEARCHED        (IPC)

The present search report has been drawn up for all claims

| Place of search | Date of completion of the search | Examiner |
|---|---|---|
| Munich | 29 April 2015 | Greiser, Norbert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 15 15 4579

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2015

| Patent document cited in search report | | Publication date | Patent family member(s) | | Publication date |
|---|---|---|---|---|---|
| EP 1667107 | A1 | 07-06-2006 | CN | 1808414 A | 26-07-2006 |
| | | | EP | 1667107 A1 | 07-06-2006 |
| | | | JP | 4639784 B2 | 23-02-2011 |
| | | | JP | 2006162898 A | 22-06-2006 |
| | | | KR | 20060063752 A | 12-06-2006 |
| | | | US | 2006184471 A1 | 17-08-2006 |
| US 2013262096 | A1 | 03-10-2013 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61938656 A